Europäisches Patentamt

**European Patent Office**

Office européen des brevets

(11) Publication number: **0 310 369**
**A1**

(12) **EUROPEAN PATENT APPLICATION**

(21) Application number: **88309012.8**

(22) Date of filing: **29.09.88**

(51) Int. Cl.⁴: **F 16 L 13/00**
F 28 F 9/02, F 16 L 25/00

(30) Priority: **30.09.87 GB 8722978**
**08.04.88 GB 8808216**

(43) Date of publication of application:
**05.04.89 Bulletin 89/14**

(84) Designated Contracting States: **DE ES FR GB IT**

(71) Applicant: **BTR INDUSTRIES LIMITED**
**Silvertown House Vincent Square**
**London, SW1P 2PL (GB)**

(72) Inventor: **Brown, Leslie**
**139 Hollywood Lane**
**Hollywood Birmingham B47 5QJ (GB)**

(74) Representative: **Treves, Barry William et al**
**BTR Group Patent & Trade Mark Service P.O. Box 504**
**Erdington Birmingham B24 9QH (GB)**

(54) **Connecting device.**

(57) A device for connecting two or more articles comprising a plurality of spaced-apart members (28, 29, 30 or 36 or 61) capable of being assembled together in a ring in interdigitating arrangement. The members are locked together by a ring (31 or 37 or 62) which may be of shape memory effect material.

The articles to be connected may be rods, tubes or components of a composite article such as a heat exchanger

Fig.3.

EP 0 310 369 A1

**Description**

## CONNECTING DEVICE

This invention relates to a connecting device for joining together two or more articles such as rods, pipes or components of a heat exchanger.

Rods, pipes or other articles are conventionally joined together by various mechanical means. For example they may be formed with flanges and held together by nuts and bolts or screws. These mechanical means require the article to be machined and/or shaped, which can be costly, and the utilisation of space by the flanges etc which could be taken up by other devices etc.

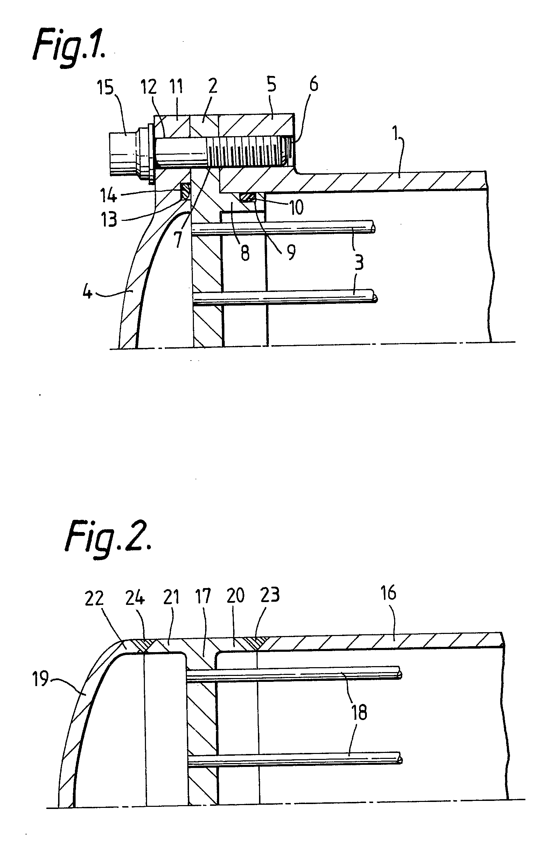

One example of an apparatus comprising several articles joined together by means of flanges and bolts is a heat exchanger as illustrated in Figure 1 of the accompanying drawings. This Figure 1 shows a partial cross-section of a heat exchanger comprising an outer shell 1, a tube plate 2 supporting a tube matrix 3 (only two tubes shown) and an end cover 4. In operation one fluid flows from within the end cover 4 through the tube matrix 3 and the other fluid flows around the outside of the tube matrix 3 inside the shell 1.

As can be seen in the drawing the shell 1 in the form of an open-ended cylinder is formed with a flange 5 extending around the edge of its open end, the flange extending radially outwards from the shell. A plurality of internally threaded holes 6 is formed in the flange 5, spaced apart symmetrically around the shell, only one hole being illustrated.

The tube plate 2 is also provided with a plurality of holes 7 equal in number, spacing and pitch centre diameter to the threaded holes 6 in the flange 5 of the shell, and with an axially-extending cylindrical flange 8. The outer surface of the cylindrical flange 8 is a sliding fit inside the cylindrical shell 2, and is provided with a circumferentially extending groove 9 containing an 0-ring seal 10 which engages the interior surface of the shell 1.

The cover 4 is generally dome-shaped but provided at its outer periphery with a radially-outwardly extending rim flange 11 provided with a plurality of holes 12 equal in number, spacing and pitch centre diameter to the threaded holes 6 in the flange 5 of the shell. The surface of the rim flange 11 abutting the tube plate 2 is provided with a circumferentially-extending groove 13 containing an 0-ring seal 14 thus providing a fluid-tight seal between the end cover 4 and the tube plate 2.

The shell 1, tube plate 2 and end cover 4 are joined together by means of bolts 15 (only one shown) each passing through one of the holes 12 in the cover 4 and one of the holes in the end plate 2, and engaging with the thread on the interior of one of the holes 6 in the flange 5 of the shell 1.

As will be appreciated the formation of the flange 5 of the shell 1 and the rim flange 11 of the cover 4 and the holes therein requires relatively expensive shaping or casting processes and machining operations. The flanges take up space externally of the shell 1 and space must also be left for an operator to insert a tool e.g. a spanner, for tightening the bolts 15. Furthermore, when there is a need to remove the tube matrix for inspection and repair care must be taken not to damage the various flanges and holes and to ensure that the various component articles i.e. the shell 1, end plate 2 and cover 4 are joined with the same force on each occasion.

In other conventionally-used methods of joining the component articles are screw-threaded e.g. one pipe may be formed with an externally screw-threaded spigot which engages with an internally screw-threaded socket on another pipe, but this requires relatively expensive shaping and machining operations, and the rotation of one of the pipes relative to the other. A further disadvantage is that it may not be easy to separate the two pipes and then re-join them with the same force.

Sometimes component articles are joined together by welding or brazing, or by the use of an adhesive. An example of a prior art construction using welding is illustrated in Figure 2 which is a partial cross-section through a heat exchanger comprising a cylindrical shell 16, a tube plate 17 supporting a tube matrix 18 (only two tubes being shown) and a domed end cover 19. The tube plate 17 is formed in this construction with two flanges 20 and 21, one flange 20 extending in one axial direction towards the shell 26 and the other flange 21 extending in the opposite axial direction towards the rim 22 of the end cover 19. The rim 22, flanges 20 and 21 and shell 16 each have equal external diameters. As shown the end of the shell 16 is joined to one flange 20 of the tube plate 17 by means of a continuous weld 23 and the rim 22 of the cover 19 is joined to the other flange 21 of the tube plate by means of another continuous weld 24.

When a need to inspect and possibly repair or replace a tube from the matrix 18 arises it is not easy to separate the cover from the tube plate, or the tube plate from the shell and it is difficult to remake the welds since the mating surfaces may well have become damaged or deformed.

It is an object of the present invention to provide a connecting device the use of which largely overcomes or eliminates the above-mentioned disadvantages.

In accordance with the invention, a connecting device for joining two or more articles together comprises a plurality of spaced-apart members capable of being assembled together in generally side-by-side relationship in a ring in interdigitating relationship, and a locking ring capable of being located around the assembled members.

The articles to be joined together may, for example be two rods in end-to- end relationship, two pipes in end-to-end abutting or socket and spigot relationship or components of a larger device e.g. the shell, tube plate and end cover of a heat exchanger.

Some of the, and preferably alternate, members are associated with one of the articles and the remaining members are associated with one or more other articles. Each member may be attached to or, preferably, integrally united or formed with the article with which each end is associated. Preferably some of the members may be capable of a relatively small amount of inwards movement so that the ring of members as a whole is capable of a relatively small amount of inwards compression. Some of the members may be provided, preferably on their outer surface, with guide means for locating the locking ring.

Preferably the connecting device comprises sealing means for ensuring that the connection between the articles is fluid-tight. This applies particularly in the case when the articles are hollow e.g. two tubes. The sealing means may for example comprise compressible material such as rubber or plastic between adjacent surfaces of the members in the ring, or between the members and the or each article, or a relatively rigid sealing member located within the ring of members and capable of withstanding a compression force applied to the ring of members by the locking ring.

By "shape memory effect" is meant a material which undergoes a thermoelastic martensitic transformation, such a transformation being characterised by martensite plates forming and growing continuously as the temperature is lowered through the transformation, and similarly shrinking and vanishing as the temperature is raised through the transformation.

A range of alloys based on the Cu. Zn. Al. and Ni.Ti. systems have been identified, which, if plastically deformed in the martensitic state are able to exhibit the shape memory effect.

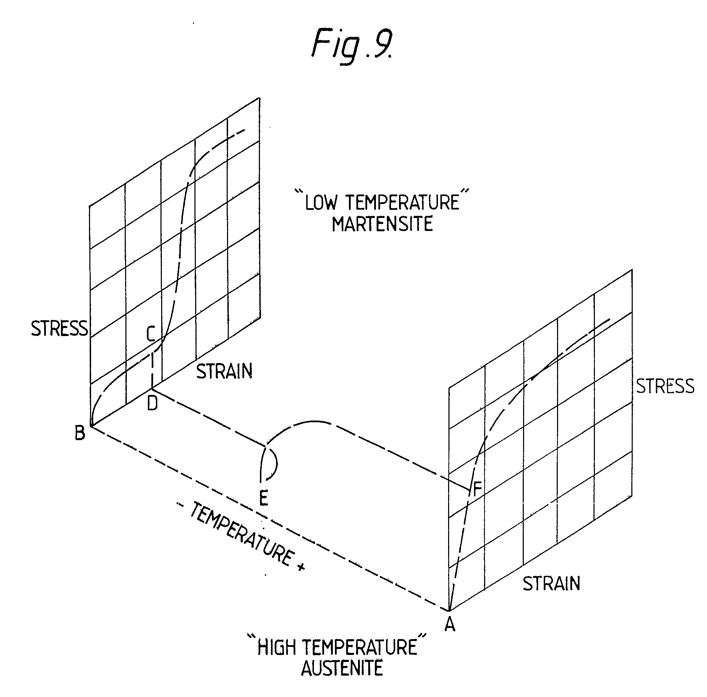

The characteristics of a "shape memory effect" material will be better understood if a ring of an alloy is imagined, and this ring is required to be positioned securely on a shaft. The ring is first machined to the desired memory shape in the "high temperature", austenite phase. This is typically at ambient temperature, e.g. 0°C - 30°C. When machined the ring has an internal diameter slightly less than the external diameter of the shaft (Point A in Figure 9). The ring is then cooled to its "low temperature" martensite phase e.g. by spraying it with liquid nitrogen (Point B in Figure 9). When in the low temperature phase a controlled stress is applied which deforms the ring to an intermediate diameter (Point C in Figure 9). In other words the ring is expanded so that its internal diameter is increased to a size slightly larger than the external diameter of the shaft. When the controlled stress is removed the ring retains approximately 8% strain and it will retain this deformed shape as long as it is held below the transormation temperature (Point D in Figure 9). When the ring is allowed to warm through the phase transformation temperature zone the alloy structure returns to austenite and the inside diameter returns to its previously machined dimension. When it is installed on a shaft before warming it will contact the shaft as it shrinks (Point E in Figure 9). This produces a stress in both the ring and the shaft which will increase until equilibrium of force is reached between the shaft and the ring. The ring is then permanently installed on the shaft and cannot (at warm temperature) be easily removed (Point F in Figure 9).

With many of these shape memory effect materials it is possible to remove the ring by cooling it again to the "low temperature" martensite phase when it will expand to its deformed shape (Point D in Figure 9). However this reversibility is not always possible in view of the characteristics of some shape memory effect materials and then the ring must be removed by other methods e.g. by cutting.

In these instances where the ring can be removed by cooling the process is repeatable as the various stresses and strains involved are reproducible.

Three embodiments of the invention will now be described by way of example only. Reference will be made to the accompanying drawings of which:-

Figure 1 is a partial longitudinal cross-section through a conventional heat exchanger having an end cover and tube plate bolted to a shell;

Figure 2 is a partial longitudinal cross-section through a conventional heat exchanger having an end cover, tube plate and shell welded together;

Figure 3 is an exploded side view of a connecting device in accordance with the first embodiment of the invention as used for joining the ends of two rods together;

Figure 4 is a side view of the connecting device in accordance with the first embodiment of the invention in assembled condition;

Figure 5 is a partial longitudinal cross-section through a connecting device in accordance with a second embodiment of the invention as used in joining two pipes together;

Figure 6 is a side view of the ends of the two pipes and part of the connecting device shown in Figure 5;

Figure 7 is an end view of the right-hand pipe and part of the connecting device shown in Figure 6;

Figure 8 is a partial longitudinal cross-section through a connecting device in accordance with a third embodiment of the invention as used in joining the component parts of a heat exchanger together; and

Figure 9 shows the stress/strain characteristics of a shape memory effect material in "low temperature" and "high temperature" phases.

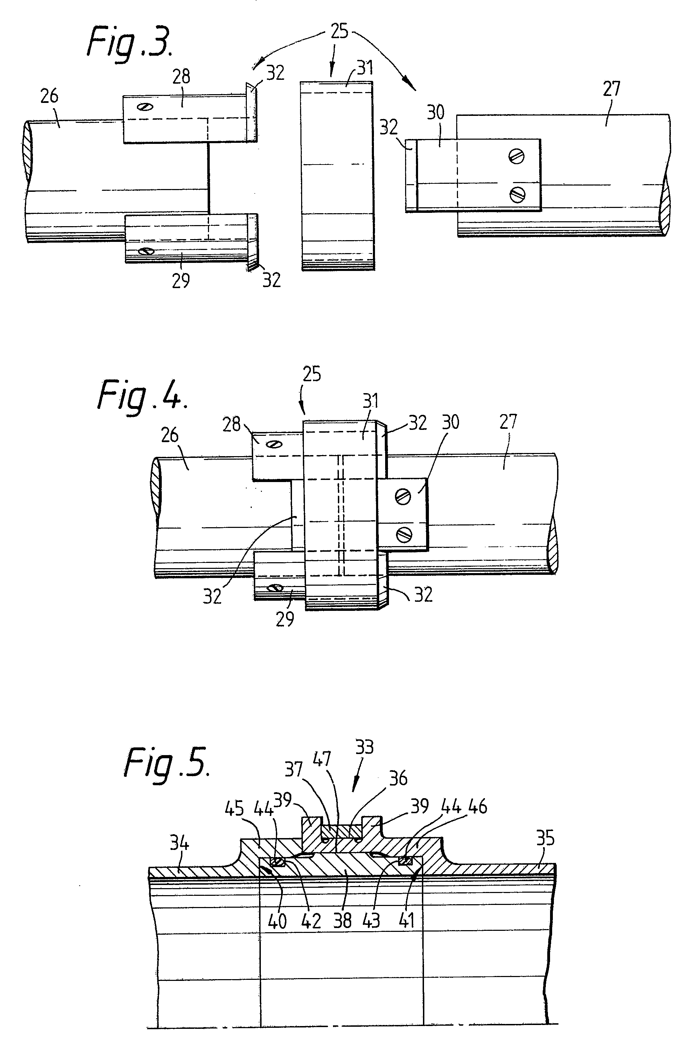

The first embodiment of the invention, illustrated in Figures 3 and 4 comprises a connecting device 25 for detachably joining together the ends of two rods 26 and 27. As shown the connecting device 25 comprises four members 28, 29 and 30 (the fourth member is hidden by member 30 in Figure 3) and a cylindrical locking ring 31.

Each member 28, 29 and 30 is of the same form being generally rectangular in plan view and of curved cross-section having a width which is slightly less than one quarter of the circumference of the rods 26 and 27. Each member has a small wedge-shaped flange 32 on its outer surface and adjacent one of its shorter, curved sides.

Two members 28 and 29 are secured by means of two screws 33 to the end of one rod 26 in diametrically opposed relationship to one another, and the other two members 30 (and the fourth, unseen member) are secured in a similar manner to the other rod 27. The flanged sides of the members are positioned beyond the end of the rod to which it is secured so that the distance between the side of each flange nearer to the rod end and the rod end is equal to half the width of the locking ring 31.

To connect the two rods 26 and 27 together the ends are placed in abutting relationship with a member such as 30 on one rod 27 positioned in the space between the two members 28 and 29 on the other rod 26 as shown in Figure 4. The locking ring 31 is then placed around the members and its circumference reduced e.g. by screw means not shown to compress the member tightly against the ends of the rods. The flanges 32 on the members act as guide means to locate the locking ring so that it is symmetrically disposed with respect to each rod end.

In a first modification of the first embodiment the locking ring may be of shape memory effect material and is applied to the outer surface of the four members in an analogous manner to the positioning of a ring on a shaft as described with reference to Figure 9. Briefly, the cylindrical locking ring 31 is cooled, deformed outwards at low temperature, and positioned so as to encircle the four members and between the flanges 32 thereon. The locking ring 31 is allowed to warm up to ambient temperatures so that it presses radially inwards against the four members which are compressed together, and the whole device of locking ring 31 and four members 28, 29, 30 (and the fourth member) connect the two rods 26 and 27 together.

In a second modification of the first embodiment the locking ring is circumferentially unbroken and the four members 28, 29, 30 (and the fourth, hidden member) are each made of relatively flexible and/or compressible material such as spring steel or a suitable reinforced plastic. The two rods 26 and 27 are brought together so that the members are forced through the locking ring 31. As the wedge-shaped flange 32 on the member comes into contact with or passes through the ring, the flange and/or the member is deformed radially inwards until the flange appears on the other side of the ring as shown in Figure 4. Each member and its flange then takes up its original undeformed shape. The rods may be disconnected by undoing the screws securing the member to the rod. The member may then be separated from the locking ring so that the connecting device may be used again.

In all forms of the embodiment just described the rods are prevented from rotating relative to one another by the abutment of the faces of the longer sides of each member with the faces of the longer sides of each member alongside. In addition the rods are prevented from being moved apart by the abutment of the faces of the flanges 32 against the sides of the locking ring 31.

In each modification of the first embodiment just described there are four equally-sized members, two secured to one rod and two to the other. However other numbers of members may be used e.g. six or eight in total. Alternatively, the members may not be of equal size. For example two members on one rod may be as in the first modification, but the other two members on the other rod may be such that one is wider and the other narrower. The spaces between the two members on the said one rod are adjusted accordingly. This arrangement ensures that the two rods are always connected together in the same relative positions i.e. one is not rotated relative to the other when disconnected and re-connected.

The second embodiment of the invention illustrated in Figures 5, 6 and 7 comprises a connecting device 33 for detachably joining two metal e.g. steel or aluminium alloy, pipes 34 and 35 together in end-to-end relationship. The device comprises eight members 36, a cylindrical locking ring 37 and sealing means comprising a cylindrical sleeve 38.

The two pipes 34 and 35 each have ends formed e.g. by casting, with four members 36 each in effect comprising a sector of a cylinder having a curved length equal to one-eighth of the circumference of each pipe. The four members on one pipe 34 are equally circumferentially spaced apart and the spaces between receive the four members on the other pipe 35 when joined together.

The outer surface of each member is formed or provided with two radially-and circumferentially-extending flanges 39 defining a channel 39a for receiving the locking ring 37 when the pipes 34 and 35 are joined together.

As can be seen especially in Figure 5 the two ends of the pipes 34 and 35 are each formed with an enlarged portion 45 and 46 of increased diameter, an internal shoulder (40 on pipe 34 and 41 on pipe 35) being formed at the junction of the enlarged portion 45 or 46 and the main part of each pipe 34 or 35. When the two pipes 34 and 35 are connected together the ends of the sleeve 38 abut the two shoulders 40 and 41.

The sleeve has an outer diameter such that it is a sliding fit in the enlarged end portions 45 and 46 of the two pipes 34 and 35 and is formed with two circumferential grooves 42 and 43 on its outer surface, one groove being near to one end of the sleeve and the other groove being near to the other end. The grooves 42 and 43 retain '0'-ring seals 44 which engage with the interior surface of the enlarged portion 45, 46 of each pipe 34, 35. The sleeve also has an internal diameter equal to the internal diameter of the main parts of the two pipes 34 and 35 so that fluid flow along the pipes is not affected. The central portion 47 of the outer surface of the sleeve 38 has an enlarged diameter which corresponds to the internal diameter of each member 36, which is slightly greater than the internal diameter of the enlarged portions 45 and 46 of each pipe 34 and 35. The central portion 47 supports the ring of members 36 against the radially inwards compression of the locking ring 37 when the two pipes 34 and 35 are joined together by the connecting device 33.

To make the connection between the two pipes the sleeve 38 with '0'-ring seals 44 in their respective grooves 42 and 43 is slid into the end of one of these two pipes e.g. 35 so that one end abuts the internal shoulder 41. The other pipe 34 is then slid on to the sleeve and positioned so that the members form a complete band with a continuous channel on its outer surface and the internal shoulder 40 abuts the other end of the sleeve. The '0'-ring seals form fluid-tight seals with the pipes. The locking ring 37 of shape memory effect is then applied to the ring of eight members 36 between the flanges 39 in an analogous manner to the positioning of a ring on a shaft as described with reference to Figure 9. Briefly the cylindrical locking ring 37 is cooled, deformed outwards at low temperature, and positioned so as to encircle the members 36 between the flanges 39. The locking ring is allowed to warm up to ambient temperatures so that it presses radially inwards against the eight members 36 which are compressed together against the central portion 47 of the sleeve 38, and the whole connecting device 33 of locking ring 37, members 36 and sleeve 38 join the two pipes 34 and 35 together.

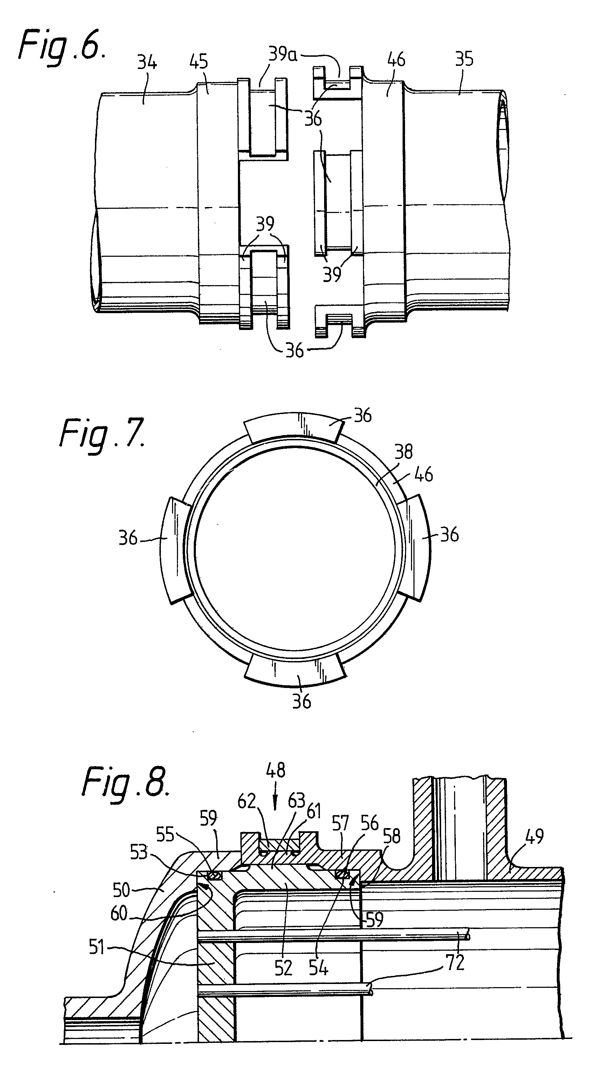

The third embodiment of the invention shown in Figure 8 comprises a connecting device 48 for detachably joining together the component parts of a heat exchanger. As shown the heat exchanger comprises a shell 49, an end cover 50 and a tube plate 51 supporting a tube matrix 72 (only two tubes shown in Figure 8).

The tube plate 51 is provided with a cylindrical edge flange 52 and two circumferential grooves 53 and 54 are formed on the outer surface thereof. The grooves 53 and 54 retain '0'-ring seals 55 and 56 respectively.

The end of the shell 49 is formed with an end socket 57 in which the edge flange 52 is a sliding fit, the extremity 58 of the flange abutting an internal shoulder 59 on the shell. One of the '0'-ring seals 56 engages the interior surface of the end socket 57 to form a fluid-tight seal between the tube plate 51 and the shell 49.

The edge of the end cover 50 is formed with a rim socket 59 which substantially matches the end socket 57 of the shell 49. When the end cover 50 is assembled together with the shell 49 the rim socket slidingly receives the tube plate 51 and part of the edge flange 52. The edge of the tube plate abuts an internal shoulder 60 of the rim socket 59 and the other '0'-ring seal 55 engages the internal surface of the rim socket to form a fluid-tight seal between the end cover 50 and the tube plate 51.

Eight members 61 corresponding exactly to the eight members 36 shown in Figures 5, 6 and 7 illustrating the second embodiment are integrally formed with, e.g. by casting, or welded to, the edge of the rim socket 59 of the cover 50 and the end socket 57 of the shell 49, four members being associated with the cover 50 and the other four being associated with the shell 49. The configuration and arrangement of the members 61 is exactly the same as those of members 36.

The connecting device 48 also comprises a locking ring 62 of shape memory effect material which is exactly the same as the locking ring 37 of the second embodiment and shown in Figure 5.

The edge flange 52 of the tube plate 51 is provided in the region generally mid-way between the two circumferential grooves 53 and 54 with a band 63 on the outer surface of increased diameter. This band 63 is analogous to the central portion 47 of the sleeve 38 of the second embodiment illustrated in Figure 5 and provides a support surface for the members 61 when placed under compression by the locking ring 62.

To connect the component parts of the heat exchanger together the edge flange 52 of the tube plate is slid into position within the end socket 57 of the shell 49 so that the extremity 58 abuts the shoulder 59 and the '0'-ring seal 56 engages the interior surface of the end socket. The end cover 50 is then positioned so that the members 61 on the rim socket 59 interdigitate with the members 61 on the end socket 57 of the shell 49 and the edge of the tube plate 51 abuts the shoulder 60 of the rim socket 59, the '0'-ring seal 55 within the groove 53 engaging the interior surface of the rim socket to make a fluid-tight seal. The locking ring 62 is then applied to the members 61 in the same manner as the locking ring 37 is applied to the members 36 of the second embodiment shown in Figure 5.

The main advantage of the present invention is that the connecting device can easily be removed, the separate articles e.g. the component parts of a heat exchanger, detached from one another and then reconnected time and time again as required without damage and, especially when a locking ring of shape memory effect material is used, with controllable stresses. Furthermore the shape of the connecting device is relatively simple and does not take up excessive space nor need complicated machining or shaping. This can be seen by, for example, comparing the constructions illustrated in Figure 8 (the third embodiment) and in Figure 1 (a conventional arrangement).

## Claims

1. A connecting device for joining two or more articles together characterised by comprising a plurality of spaced-apart members (28, 29, 30, or 36 or 61) capable of being assembled together in generally side-by-side relationship in a ring in interdigitating arrangement, and a locking ring capable of being located around the assembled members (28, 29, 30 or 36 or 61).

2. A connecting device according to claim 1 characterised in that some of the members (28, 29, 30 or 36 or 61) are associated with one of the articles (26, 27 or 34, 35 or 49, 50), and the remaining members (28, 29, 30 or 36 or 61) are associated with one or more other articles (26, 27 or 34, 35 or 49, 50).

3. A connecting device according to claim 1 or 2 characterised in that alternate members (28, 29, 30 or 36 or 61) are associated with one of the articles (26, 27 or 34, 35 or 49, 50), and the remaining members (28, 29, 30 or 36 or 61) are associated with one or more other articles (26, 27 or 34, 35 or 49, 50).

4. A connecting device according to claim 2 or 3 characterised in that each member (28, 29, 30) is attached to the article (26, 27) with which it is associated.

5. A connecting device according to claim 2 or 3 characterised in that each member (36 or 61) is integrally united with the article (34, 35 or 49, 50) with which it is associated.

6. A connecting device according to any one of claims 2 to 5 wherein the sizes of those members (28, 29, 30 or 36 or 61) associated with one of the articles (26, 27 or 34, 35 or 49, 50) are not equal and the spacing between the remaining members is such as to maintain the interdigitating arrangement.

7. A connecting device according to any one of the preceding claims wherein some of the members (28, 29, 30 or 36 or 61) are capable of inwards movement.

8. A connecting device according to any one of the preceding claims characterised in that some of the members (28, 29, 30 or 36 or 61) are provided with guide means for the locking ring (31 or 37 or 62).

9. A connecting device according to any one of the preceding claims characterised in that some of the members (28, 29, 30 or 36 or 61) are provided with guide means on their outer surface for locating the locking ring (31 or 37 or 62).

10. A connecting device according to either claim 8 or 9 characterised in that the guide means comprises flange means (32 or 39).

11. A connecting device according to any one of claims 8, 9 or 10 characterised in that the guide means comprises channel means (39a).

12. A connecting device according to any one of the preceding claims characterised by comprising sealing means for ensuring a fluid-tight connection between the articles (34, 35 or 49, 50).

13. A connecting device according to claim 12 characterised in that sealing means comprises compressible material between adjacent surfaces of the members (36 or 61) in the assembled ring.

14. A connecting device according to claim 12 or 13 characterised in that the sealing means comprises compressible material between the members (36 or 61) and the or each article (34, 35 or 49, 50).

15. A connecting device according to claim 12, 13 or 14 characterised in that the sealing means comprises a relatively rigid sealing member (38) located within a ring of members (36) and capable of withstanding a compression force applied to the ring of members (36) by the locking ring (37).

16. A connecting device according to any one of the preceding claims characterised in that the locking ring (31 or 37 or 62) comprises "shape memory effect" material as defined herein.

*Fig.1.*

*Fig.2.*

*Fig.3.*

*Fig.4.*

*Fig.5.*

Fig.6.

Fig.7.

Fig.8.

# Fig.9.

"LOW TEMPERATURE"
MARTENSITE

STRESS

STRAIN

B

C

D

E

- TEMPERATURE +

STRESS

STRAIN

F

A

"HIGH TEMPERATURE"
AUSTENITE

European Patent
Office

**EUROPEAN SEARCH REPORT**

Application Number

EP 88 30 9012

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 884 559 (H.F. CULLENDER)<br>* Page 1, lines 30-71; page 4, line 90 - page 5, line 117; figures 1-5 * | 1-10,12 -16 | F 16 L 13/00<br>F 28 F 9/02<br>F 16 L 25/00 |
| X | DE-B-1 035 989 (H. RITTER et al.)<br>* Column 4, lines 1-25; figures 3,4 * | 1-10 | |
| X | FR-A-1 566 856 (E. BALLERINI)<br>* Page 2, lines 3-41; figures 1-3 * | 1-9,11 | |
| A | US-A-3 253 842 (G.B. RABE)<br>* Column 2, lines 8-60; figures 1,2 * | 15 | |
| A | FR-A-2 331 738 (RAYCHEM LTD)<br>* Page 2, lines 6-16; figures 1-4 * | 16 | |

TECHNICAL FIELDS
SEARCHED (Int. Cl.4)

F 16 B
F 28 F
F 16 L

The present search report has been drawn up for all claims

| Place of search | Date of completion of the search | Examiner |
|---|---|---|
| THE HAGUE | 17-11-1988 | ARESO Y SALINAS J. |

EPO FORM 1503 03.82 (P0401)